# EUROPEAN PATENT SPECIFICATION

(11) **EP 2 027 588 B1**
(45) Date of publication and mention of the grant of the patent: **18.01.2017**
(21) Application number: 07746483.2
(22) Date of filing: 11.05.2007
(51) Int. Cl.: H01B 1/12, C08G 61/12, H01M 4/02

(54) **HIGHLY ELECTRON CONDUCTIVE POLYMER AND ELECTROCHEMICAL ENERGY STORAGE DEVICE WITH HIGH CAPACITY AND HIGH POWER USING THE SAME**
ELEKTRONENHOCHLEITFÄHIGES POLYMER UND ELEKTROCHEMISCHE ENERGIESPEICHERANORDNUNG MIT HOHER KAPAZITÄT UND HOHER LEISTUNG DAMIT
POLYMÈRE À HAUTE CAPACITÉ DE CONDUCTIVITÉ D'ÉLECTRONS ET DISPOSITIF DE STOCKAGE D'ÉNERGIE ÉLECTROCHIMIQUE HAUTE CAPACITÉ ET HAUTE PUISSANCE UTILISANT LEDIT POLYMÈRE

(30) Priority: 12.05.2006 KR 20060042878
(43) Date of publication of application: 25.02.2009
(73) Proprietor: LG Chem, Ltd., Youngdungpo-gu, Seoul 150-721 (KR)
(72) Inventor: PARK, Jong-Hyeok, Yuseong-gu, Daejeon 305-380 (KR); LEE, Sang-Young, Yuseong-gu, Daejeon 305-761 (KR); LEE, Ok-Joo, Yuseong-gu, Daejeon 305-768 (KR)
(74) Representative: Hoffmann Eitle
(86) International application number: PCT/KR2007/002334
(87) International publication number: WO 2007/133017

(56) References cited:
- JP-A- 07 238 150
- JP-A- 11 097 025
- JP-A- 11 273 662
- JP-A- 61 200 669
- KR-A- 20060 085 846
- US-A- 4 948 685
- US-A- 5 279 769
- US-A- 5 733 683
- US-A1- 2006 275 660

## Description

### Technical Field

The present invention relates to a method for modifying a conductive polymer to impart a high electron conductivity comparable to that of a conventional conductive agent.

### Background Art

In general, a secondary electric energy storage device is a system for storing and accumulating electric power so as to transfer it to an external electric circuit. Particular examples of such electric energy storage devices include general batteries, capacitors, electrochemical capacitors (super capacitors, ultra capacitors and electric dual layer capacitors), or the like. A lithium secondary battery, a typical example of such batteries, accomplishes charge/discharge via the lithium ion intercalaction/deintercalation mechanism, while an electrochemical capacitor accomplishes charge/discharge via the electric dual layer mechanism or Faraday mechanism. An electrode for such energy storage devices generally includes an electrode active material, a binder and a conductive agent. Among these components, the binder and the conductive agent are generally formed of a polymer and a carbonaceous material with excellent conductivity, respectively. In the case of a conventional lithium secondary battery, the binder and the conductive agent are used in an amount of about 5 wt% based on the total weight of the electrode. In the case of an electrochemical capacitor, they are used in an amount of about 10 wt% or more.

Meanwhile, an electrode active material for such secondary electric energy storage devices requires a polymer binder in order to allow the electrode active material, such as activated carbon, to be coated onto a collector in the form of a smooth film. Such requirement also depends on the constitution of a particular system. Additionally, a conductive agent in introduced into such devices in order to reduce the internal resistance. However, the use of such polymer binders and conductive agents cannot contribute to the capacity of the energy storage devices. Therefore, there has been a need for developing a method for increasing the capacity of a secondary electric energy storage device by introducing a novel material capable of functioning not only as a binder but also as a conductive agent so as to increase the amount of an electrode active material in an electrode.

US 5,733,683 A describes a method for realizing a doped conductive polymer via applying a voltage to a pre-polymerized thiophene-based conjugated polymer in the presence of a dopant.

US 4,948,685 A and US 2006/275660 A1 describe a method for realizing a doped conductive polymer via electropolymerization of aniline and pyrrole, respectively, in the presence of dopant molecules.

### Disclosure of the invention

### Technical Problem

Therefore, the present invention has been made in view of the above-mentioned problem. The inventors of the present invention focused their attention to a novel doping method for a conductive polymer to improve the electron conductivity of the conductive polymer. The inventors of the present invention have found that the conductive polymer modified by the doping method provides a high electron conductivity equal to or higher than that of a conventional conductive agent while maintaining its function as a binder.

The present invention is based on this finding.

### Technical solution

The present invention provides a method for preparing a highly electron conductive polymer, the method comprising a step of doping a conductive polymer with a dopant capable of introducing movable charge carriers into the repeating units of the polymer, wherein a voltage higher than the conduction band of the polymer is applied to the polymer while the polymer is doped with the dopant, so as to modify the electron conductivity of the conductive polymer.

The highly electron conductive polymer obtained by the above method is suitable for use in an electrode and an electrochemical device including the electrode.

Hereinafter, the present invention will be explained in more detail.

In general, a conductive polymer means a polymer formed from an organic monomer and having a π-conjugation system formed by carbon-carbon bonds in which carbon P_{z} orbitals are overlapped and alternately arranged. As used herein, the term "conductive polymer" means a polymer having an extended π-conjugated group so as to form a charge transfer complex.

Unlike non-conductive polymers, such conductive polymers allow free movement of movable charges present in the repeating units, and may show a conductivity of about 10⁻⁵∼10¹ S/cm by virtue of such movable charges. However, such conductive polymers show a relatively low conductivity as compared to conventional conductive agents, and thus require an additional conductive agent in order to make electric connection in an electrode active material, when manufacturing an electrode by using such conductive polymers. Therefore, there is a certain limit in the amount of an electrode active material acceptable in an electrode, resulting in a limitation in improving the capacity and output of an electrochemical device.

Thus, the present invention provides a novel doping method by which the electron conductivity of a conductive polymer used for forming an electrode can be significantly improved.

According to the prior art, a method of doping a dopant onto a conductive polymer has been suggested to increase the conductivity of the polymer. However, since the conductive polymer is electrochemically neutral, it is somewhat difficult to perform the doping of a cationically or anionically charged component in a dopant into the repeating units of the polymer. Therefore, there has been a limitation in modifying such polymers to have a conductivity comparable to the conductivity of a conductive agent.

On the contrary, according to the present invention, an electrochemically neutral conductive polymer is controlled to have electrochemically positive (+) or negative (-) polarity while a dopant is doped into the conductive polymer, so as to increase the movable charges doped into the polymer.

In other words, a salt, a kind of dopant, is dissociated into a positive charge and a negative charge in a solvent, and such charges are introduced into the repeating units of a conductive polymer, resulting in an increase in the movable charges. Herein, when a certain voltage is applied to the conductive polymer, the conductive polymer, which is originally neutral, is partially charged positively (+) or negatively (-). Thus, a large amount of positive (+) charges and negative (-) charges of the dopant can be incorporated into the negatively (-) or positively (+) charged conductive polymer, respectively, via an electrostatic attraction force. Therefore, movable charges doped into the polymer increase, and thus the electron conductivity of the conductive polymer increases significantly.

In fact, it can be seen from the following experimental example that the highly electron conductive polymer, to which the novel doping method according to the present invention is applied, is modified to have an electron conductivity increased by at least 100 times as compared to the conductivity before doping, and shows a conductivity comparable to the conductivity of a conventional conductive agent (see the following Table 1).

The novel doping method according to the present invention includes a step of applying a certain voltage to a conductive polymer while the conductive polymer is doped with a dopant introduced thereto. It is also possible to apply a certain voltage to the polymer after the polymer is doped with the dopant.

First, introduction of a dopant includes introducing movable charge carriers into the repeating units of a conductive polymer. The dopant introduced as mentioned above can activate charge transfer occurring in the repeating units of the polymer, and thus can improve the conductivity of the polymer while maintaining other physical properties of the polymer.

The dopant causes movable charge carriers, such as electric charges and/or holes, to be introduced into the repeating units of the conductive polymer so as to activate charge transfer occurring in the repeating units of a neutral polymer.

The present invention uses a dopant that includes an ionizable salt. The salt is dissociated in a solution and is introduced into the repeating units of a conductive polymer to cause a partial charge transfer between the conductive polymer molecules, resulting in an increase in the electron conductivity. Additionally, when a charge transfer occurs in the polymer chain, i.e. the repeating units, the salt can be present in the polymer chain in a charged state instead of the moving charges. Therefore, the polymer can maintain its original physical properties with the aid of such salts.

The dopant is selected from sulfonic acids non-substituted or substituted with Na, K, Li or Ca (e.g. 2-acrylo-amido-1-propanesulfonic acid, dodecylbenzenesulfonic acid, camphorsulfonic acid), transition metal salts containing PF₆⁻, BF₆⁻, Cl⁻, SO₄²⁻, ClO₄⁻ or F⁻ (e.g. salts of gold, iron, copper or platinum), I₂, AsF₆, LiBF₄, C1~C6 alkyl or aryl halide, and acid anhydrides.

The dopant is used in an amount of 30∼50 moles per 100 moles of the conductive polymer. If the dopant is used in an excessively low amount, it is not possible to impart highly electron conductive characteristics to a desired degree.

Meanwhile, voltage application in the novel doping method according to the present invention includes applying a voltage to a conductive polymer, the voltage being higher than the conduction band unique to the conductive polymer. The voltage applied to the polymer causes a change in electrochemical properties of the conductive polymer, so that the conductive polymer, which is originally neutral, can be partially charged with positive (+) or negative (-) charges.

For example, when applying a voltage of 0∼2 V to a conductive polymer in the presence of Ag-AgCl as a reference electrode, the conductive polymer is partially charged with positive (+) charges. On the other hand, when applying a voltage of -1∼-3 V to the polymer, the conductive polymer is negatively (-) charged. Therefore, a large amount of positive (+) or negative (-) movable charges present in a solution can move toward such a charged polymer via an electrostatic attraction force and can be effectively introduced into the repeating units of the polymer.

Additionally, such voltage application activates charge transfer occurring in the repeating units of the conductive polymer after doping, and thus further improve the highly electron conductive characteristics.

There is no particular limitation in the voltage applied to the conductive polymer, as long as the voltage allows activation of charges present in the repeating units of the conductive polymer. Preferably, the voltage applied to the conductive polymer is higher than the conduction band of the conductive polymer.

Herein, different kinds of conductive polymers have different conduction bands. Thus, there is no particular limitation in the voltage range, voltage application time, voltage application process, etc.

In a preferred embodiment of the novel doping method according to the present invention, a conductive polymer film is dipped into a solution in which a dopant is dissociated, and then a voltage is applied thereto. In a variant, an ionizable dopant is dispersed into a solution containing a conductive polymer dissolved in a solvent, and then a certain range of voltage is applied thereto, followed by condensation and drying.

The solvent preferably has a solubility parameter similar to the solubility parameter of the conductive polymer to be used. Non-limiting examples of the solvent that may be used in the present invention include acetone, tetrahydrofuran, methylene chloride, chloroform, dimethylformamide, N-methyl-2-pyrrolidone, cyclohexane, water or mixtures thereof.

There is no particular limitation in the composition, shape, molecular weight range, etc. of the conductive polymer, to which the novel electrochemical doping method according to the present invention is applied, as long as the polymer has conductivity.

The conductive polymer that is used in the present invention is selected from polythiophene, PEDOT (poly(ethylenedioxy)thiophene), or mixtures thereof.

The highly electron conductive polymer according to the present invention may further comprise conductive inorganic particles to increase the conductivity. The conductive inorganic particles that may be used in the present invention include conventional conductive inorganic particles known to those skilled in the art. Conductive inorganic particles having a higher conductivity are more preferred. For example, the conductive inorganic particles may have a conductivity of 1 S/cm∼10⁵ S/cm.

Additionally, the conductive inorganic particles preferably have a nano-scaled diameter so that they can be dispersed uniformly in the conductive polymer.

As described above, the conductive polymer modified to have a high electron conductivity has a significantly increased amount of movable charges present in the repeating units of the polymer. Herein, the conductive polymer can be modified in such a manner that the number of electrons present in the highly electron conductive polymer is 0.1∼1, and preferably 0.1∼0.3, per movable electron present in the repeating units of the polymer.

Also, there is no particular limitation in the conductivity of the conductive polymer, as long as the conductive polymer has an improved conductivity as compared to a conventional non-doped conductive polymer. For example, the conductive polymer may have a conductivity of 10⁻⁵∼10⁵ S/cm.

The highly electron conductive polymer may be applied to various fields. Preferably, the highly electron conductive polymer may be applied to various applications requiring a high electron conductivity and functions as a binder at the same time.

The highly electron conductive polymer can be used in an electrode, for example, an electrode comprising an electrode active material layer bound to a collector, wherein the electrode active material layer comprises: (a) an electrode active material; and (b) the highly electron conductive polymer having a modified conductivity.

Since the modified conductive polymer has an adhesion of 10 g/cm or more and a conductivity of 10⁻⁵∼10⁵ S/cm, it can serve not only as a binder but also as a conductive agent. Herein, the modified conductive polymer may have an adhesion of 10∼100 g/cm, and preferably of 30∼50 g/cm. Also, the modified conductive polymer may have an electron conductivity improved by at least 100% as compared to a conventional conductive polymer. For example, the modified conductive polymer has an electron conductivity increased by 10∼100 times, and preferably 10∼50 times, as compared to a conventional conductive polymer.

In fact, since the highly electron conductive polymer prepared by the method according to the present invention has an electron conductivity improved by at least 10 times as compared to a conventional conductive polymer, it can sufficiently serve as a conductive agent when introduced into an electrode, thereby making electric connection in an electrode active material and causing movement of ions or charges with no need for a carbon-based conductive agent. Therefore, an electrochemical device using the electrode can provide a significantly reduced electric resistance. Also, the highly electron conductive polymer satisfactorily serves as a binder to cause the electrode active material particles to be physically and electrically interconnected with each other and with a collector. Further, the conductive polymer serves as an electrode active material because it stores energy via charge adsorption, and thus contributes to the capacity by itself. As a result, an electrode using the conductive polymer can impart high output and high capacity to an electrochemical device by virtue of such an increased amount of electrode active material.

While the conventional conductive polymer causes a problem in charge/discharge cycle characteristics when used as an electrode active material, the highly electron conductive polymer prepared by a method according to the present invention maintains their main function as a binder and a conductive agent despite slightly decreased charge/discharge stability. Therefore, the highly electron conductive polymer prepared by a method according to the present invention may not adversely affect the overall charge/discharge cycle characteristics of a cell.

Further, while a conventional electrode is essentially comprised of an electrode active material, a polymer binder and a conductive agent, the electrode comprising the highly electron conductive polymer prepared by a method according to the present invention can be manufactured merely by using an electrode active material and the highly electron conductive polymer. Thus, manufacturing processes of the electrode can have improved simplicity and cost-efficiency by virtue of such a simple electrode design contrary to a conventional electrode system.

In the electrodes, the conductive polymer is used in an amount of 0.01∼90 parts by weight based on 100 parts by weight of the total electrode materials, but is not limited thereto.

The electrode comprising the highly electron conductive polymer prepared by a method according to the present invention may further comprise a binder and a conductive agent generally known to those skilled in the art in addition to the aforementioned conductive polymer.

Non-limiting examples of the binder include teflon, PVdF (polyvinylidene difluoride), styrene-butadiene rubber (SBR), cellulose-based polymer or a mixture thereof. Also, any conductive agent generally known to those skilled in the art may be used. There is no particular limitation in the amount of the binder and conductive agent.

The electrode using the highly electron conductive polymer prepared by a method according to the present invention may be manufactured via a conventional method known to those skilled in the art, for example, by binding an electrode slurry containing an electrode active material and the conductive polymer to a current collector.

Among the electrode active materials, the cathode active material includes conventional cathode active materials currently used in a cathode for an electrochemical device, and particular examples of the cathode active material include metals, metal alloys, metal oxides, petroleum coke, activated carbon, graphite or other carbonaceous materials. Also, the anode active material may be the same as the above-mentioned cathode active material.

Non-limiting examples of a cathode collector include foil formed of aluminum, nickel or a combination thereof. Non-limiting examples of an anode collector include foil formed of copper, gold, nickel, a copper alloy or a combination thereof.

Other applications include an electrochemical device comprising a cathode, an anode, a separator and an electrolyte, wherein either or both of the cathode and the anode comprise the above-mentioned highly electron conductive polymer.

The electrochemical device includes any device in which electrochemical reactions are performed. Particular examples of the electrochemical device include all kinds of primary batteries, secondary batteries, fuel cells, solar cells, capacitors, or the like. A secondary battery, particularly a lithium secondary battery, and an adsorption/desorption type electrochemical device that stores energy in it based on the mechanism of charge adsorption/desorption onto/from surfaces of both electrodes are preferred. Particular examples of the lithium secondary battery include a lithium metal secondary battery, a lithium ion secondary battery, a lithium polymer secondary battery or a lithium ion polymer secondary battery. Non-limiting examples of such adsorption/desorption type electrochemical devices include electric dual layer capacitors, super capacitors, pseudocapacitors, or the like.

The electrochemical device may be obtained by using a method generally known to one skilled in the art. For example, an electrode assembly is formed by using a cathode, an anode and a separator interposed between both electrodes, and then the electrolyte is injected thereto.

There is no particular limitation in the electrolyte that may be used, as long as the electrolyte has ion conductivity. For example, an electrolyte comprising an electrolyte salt dissolved or dissociated in an electrolyte solvent may be used.

The electrolyte salt includes a salt represented by the formula of A⁺B⁻, wherein A⁺ represents an alkali metal cation selected from the group consisting of Li⁺, Na⁺, K⁺ and combinations thereof, and B⁻ represents an anion selected from the group consisting of PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻ and combinations thereof. Additionally, (CH₃)₄N salts, (C₂H₅)₄N salts, etc. may be used.

The electrolyte solvent that may be used includes an aqueous solvent or a non-aqueous solvent. Non-limiting examples thereof include propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone (γ-butyrolactone; GBL), and mixtures thereof.

As the separator, conventional microporous separators known to prevent both electrodes from being in direct contact with each other may be used, and particular examples of such separators include polyolefin-based and/or cellulose-based separators.

### Brief Description of the Drawings

The foregoing and other objects, features and advantages of the present invention will become more apparent from the detailed description when taken in conjunction with the accompanying drawings in which:
FIG. 1 is a schematic view showing the structure of an electrode for an electric energy storage device comprising the highly electron conductive polymer prepared by a method according to the present invention as a binder;
FIG. 2 is a photographic view of an electrode for an electric energy storage device comprising the highly electron conductive polymer prepared by a method according to the present invention as a binder, taken by SEM (scanning electron microscopy); and
FIG. 3 is a graph showing variances in the capacity of the electric energy storage devices each including the electrodes according to Example 1 and Comparative Examples 1∼3 under a charge/discharge current density of 10 mA/cm².

### Best Mode for Carrying Out the Invention

Reference will now be made in detail to the preferred embodiments of the present invention. It is to be understood that the following examples are illustrative only and the present invention is not limited thereto.

### Example 1

### 1-1. Preparation of Conductive Polymer Having Improved Conductivity via Salt Introduction/Voltage Application

A conductive polymer film formed of PEDOT (poly (ethylenedioxy) thiophene) (Mw: 30,000; adhesion: 10 g/cm or higher, conductivity: ∼1X10⁻⁵ S/cm) was coated onto a platinum plate, and a voltage of 1V vs. Ag/AgCl was applied thereto for 1 hour while the conductive polymer film was dipped into 2 wt% HCl solution to provide a doped polymer, PEDOT. As a counter electrode, platinum was used.

### 1-2. Manufacture of Electrode (provided for reference purposes)

To distill water as a solvent, 90 wt% of activated carbon (MSP20, Kansai Coke and Chemicals Co., Ltd.) as an electrode active material, and 10 wt% of the modified conductive polymer PEDOT prepared from Example 1-1 were added to provide a binary mixture as electrode slurry. The electrode slurry was applied onto aluminum (Al) foil as a cathode collector having a thickness of about 20 µm, followed by drying, to provide a cathode. As an anode, the same electrode as the cathode was used.

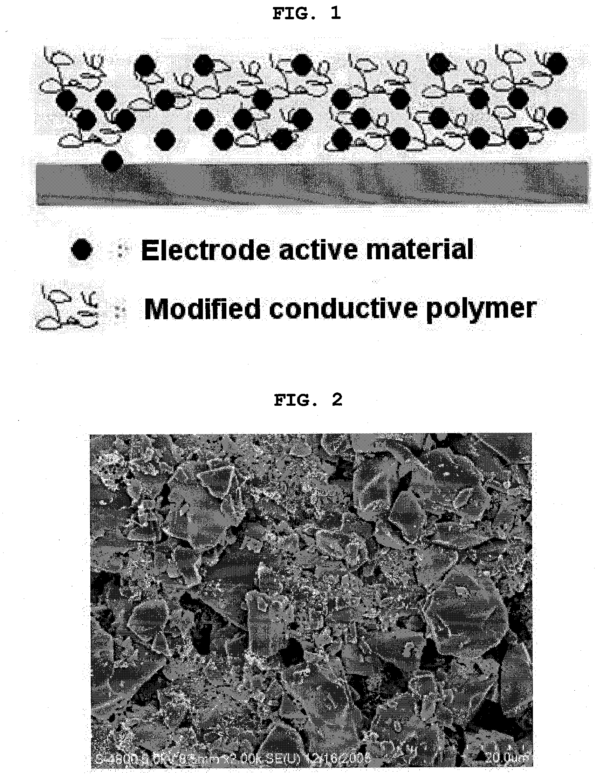

FIG. 1 shows a schematic view showing the electrode obtained in this example, and FIG. 2 shows the surface of the electrode.

### 1-3. Manufacture of Battery (provided for reference purposes)

The cathode, a separator and the anode were stacked successively to provide an electrode assembly. Then, propylene carbonate (PC) containing 1M tetraethylammonium tetrafluoroborate (TEABF₄) dissolved therein was injected to the electrode assembly to provide an electrochemical device.

### Comparative Example 1

An electrode and an electrochemical device were provided in the same manner as described in Example 1, except that 75 wt% of activated carbon as an electrode active material, 10 wt% of Super-P as a conductive agent and 15 wt% of PTFE as a binder were added to distilled water as a solvent to provide an electrode.

### Comparative Example 2

An electrode and an electrochemical device were provided in the same manner as described in Example 1, except that undoped conductive polymer PEDOT was used to provide an electrode.

### Comparative Example 3

An electrode and an electrochemical device were provided in the same manner as described in Example 1, except that a conductive polymer PEDOT, whose conductivity was improved merely by the introduction of a salt without any voltage application, was used to provide an electrode.

### Experimental Example 1. Comparison and Evaluation of Electron Conductivity

The modified highly electron conductive polymer (PEDOT) according to Example 1 was used as a sample, while Super-P currently used as a conductive agent for a lithium secondary battery and an electric dual layer capacitor and carbon nanotubes (CNT) regarded generally as a highly electron conductive material were used as controls. The above materials were individually pelletized and the electron conductivity of each material was measured by using the four-probe method.

After the test, it could be seen that the highly electron conductive polymer (PEDOT) prepared by a method according to the present invention had excellent conductivity as compared to the conventional conductive agent, Super-P, and showed an electron conductivity comparable to the conductivity of carbon nanotubes (see the following Table 1). This demonstrates that the conductive polymer can sufficiently function as a conductive agent in a cell.

**[Table 1]**

| Condition | Carbon nanotubes | Super-p | Modified conductive polymer according to Ex. 1 |
|---|---|---|---|
| Conductivity(S/cm) | 5 × 10⁻² | 1 × 10⁻² | 5 × 10⁻² |

### Experimental Example 2. Adhesion Test

The following test was performed to evaluate the adhesion of the electrodes according to Example 1 and Comparative Examples 1∼3.

The adhesion test was performed by attaching a tape onto the surface of the electrode active material layer of each electrode and removing the tape therefrom. The amount of each electrode active material layer remaining on the tape after removing the tape was shown in the following Table 2.

After the test, it could be seen that the electrode according to Comparative Example 1 using a binder (PTFE), was slightly stained with the electrode active material. On the contrary, each of the electrodes using conductive polymers according to Example 1 and Comparative examples 2 and 3 was not stained with the electrode active material (see the following Table 2). This demonstrates that the conductive polymer can serve as a high-quality binder.

**[Table 2]**

| Condition | Ex. 1 | Comp. Ex. 1 | Comp. Ex. 2 & 3 |
|---|---|---|---|
| Staining | none | Slight staining | None |

### Experimental Example 3. Evaluation of Quality of Electrochemical Device

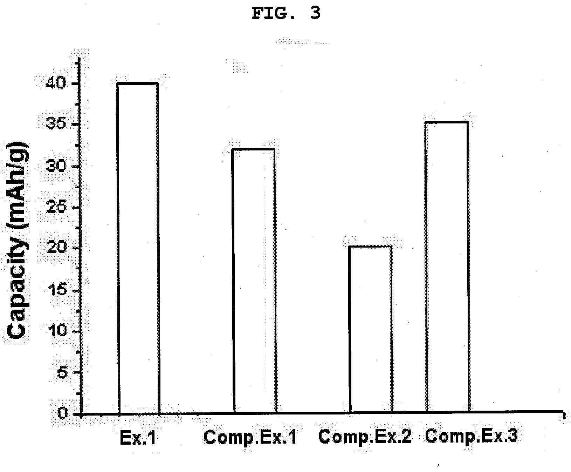

The following test was performed to evaluate the discharge capacity of the adsorption/desorption type electrochemical devices according to Example 1 and Comparative Examples 1∼3. The results are shown in FIG. 3.

When calculating the discharge specific capacitance per total weight of each electrode, the adsorption/desorption type electrochemical device (electric dual layer capacitor) according to Example 1 showed a relatively higher discharge capacity as compared to Comparative Example 1, since the device according to Example 1 showed an increase in the amount of the electrode active material by about 15% or more as compared to Comparative Example 1 (see FIG. 3).

On the contrary, it could be seen that the electrochemical devices using non-modified conductive polymer (conventional PEDOT) according to Comparative Examples 2 and 3 was degraded in terms of quality, even though the devices used an increased amount of electrode active material.

Particularly, the adsorption/desorption type electrochemical device according to Example 1 showed significantly improved discharge capacity characteristics as compared to Comparative Example 3. This demonstrates that upon doping of a conductive polymer with a dopant, voltage application should be performed at the same time to further improve the electron conductivity of the conductive polymer, and to further improve the quality of an electrochemical device.

### Industrial Applicability

As can be seen from the foregoing, the electrochemical doping method for improving the conductivity of a conductive polymer according to the present invention can impart high capacity and high output characteristics to an electrochemical device by virtue of an increase in the amount of electrode active material used in the device.

Although several preferred embodiments of the present invention have been described for illustrative purposes, those skilled in the art will appreciate that various modifications, additions and substitutions are possible, without departing from the scope of the invention as disclosed in the accompanying claims.

## Claims

1. A method for preparing a highly electron conductive polymer, the method comprising a step of doping a conductive polymer with a dopant capable of introducing movable charge carriers into repeating units of the conductive polymer, wherein a voltage higher than a conduction band of the polymer is applied to the conductive polymer while the conductive polymer is doped with the dopant, so as to modify electron conductivity of the conductive polymer,
wherein the conductive polymer is selected from the group consisting of polythiophene, PEDOT (poly(ethylenedioxy)thiophene), or mixtures thereof,
wherein the dopant includes an ionizable salt selected from the group consisting of sulfonic acids non-substituted or substituted with Na, K, Li or Ca, transition metal salts containing PF₆⁻, BF₆⁻, Cl⁻, SO₄²⁻, ClO₄⁻ or F⁻, I₂, AsF₆, LiBF₄, C1∼C6 alkyl or aryl halide, and acid anhydrides, and
wherein the dopant is used in an amount of 30∼50 moles per 100 moles of the conductive polymer.

## Patentansprüche

1. Verfahren zur Herstellung eines hoch elektronenleitenden Polymers, wobei das Verfahren einen Schritt umfasst, in dem ein leitfähiges Polymer mit einem Dotierungsmittel dotiert wird, das in der Lage ist, bewegliche Ladungsträger in Wiederholungseinheiten des leitfähigen Polymers einzuführen, wobei eine Spannung an das leitfähige Polymer angelegt wird, die höher als ein Leitungsband des Polymers ist, während das leitfähige Polymer mit einem Dotierungsmittel dotiert wird, um die Elektronenleitfähigkeit des leitfähigen Polymers zu modifizieren,
wobei das leitfähige Polymer aus der Gruppe bestehend aus Polythiophen, PEDOT (Poly(ethylendioxy)thiophen) oder Mischungen davon ausgewählt ist,
wobei das Dotierungsmittel ein ionisierbares Salz, ausgewählt aus der Gruppe bestehend aus unsubstituierten oder mit Na, K, Li oder Ca substituierten Sulfonsäuren, Übergangsmetallsalzen, enthaltend PF₆⁻, BF₆⁻, Cl⁻, SO₄²⁻, ClO₄⁻ oder F⁻, I₂, AsF₆, LiBF₄, C1∼C6**-**Alkyl-oder Arylhalogenid und Säureanhydriden, einschliesst und
wobei das Dotierungsmittel in einer Menge von 30∼50 Mol pro 100 Mol des leitfähigen Polymers verwendet wird.

## Revendications

1. Procédé pour préparer un polymère fortement conducteur d'électrons, le procédé comprenant une étape de dopage d'un polymère conducteur avec un dopant susceptible d'introduire des porteurs de charge mobiles dans des unités de répétition du polymère conducteur, dans lequel une tension supérieure à une bande de conduction du polymère est appliquée au polymère conducteur tandis que le polymère conducteur est dopé avec le dopant, de façon à modifier la conductivité des électrons du polymère conducteur,
dans lequel le polymère conducteur est sélectionné à partir du groupe constitué par du polythiophène, du PEDOT (poly(éthylènedioxy)thiofène)), ou des mélanges de ceux-ci,
dans lequel le dopant inclut un sel pouvant être ionisé sélectionné à partir du groupe constitué par des acides sulfoniques non substitués ou substitués par Na, K, Li ou Ca, des sels de métal de transition contenant PF₆⁻, BF6', Cl⁻, SO₄²⁻, ClO₄⁻ ou F⁻, I₂, AsF₆, LiBF₄, halogénure d'aryle ou alkyle en C1~C6, et des anhydrides d'acide, et
dans lequel le dopant est utilisé en une quantité de 30∼50 moles par 100 moles du polymère conducteur.
